# EUROPÄISCHE PATENTANMELDUNG

(11) **EP 2 730 493 A1**
(43) Veröffentlichungstag der Anmeldung: **14.05.2014**
(21) Anmeldenummer: 13000546.5
(22) Anmeldetag: 03.02.2013
(51) Int. Cl.: B63H 20/00, B63H 21/17

(54) **Boot mit Hochvolt-System**

(30) Priorität: 12.11.2012 DE 102012021993
(71) Anmelder: Torqeedo GmbH, 82205 Gilching (DE)
(72) Erfinder: Biebach, Jens, 82327 Tutzing (DE); Krieger, Philipp, 82340 Feldafing (DE); Hartmeyer, Marc, 81829 München (DE)
(74) Vertreter: Gellner, Bernd

(57) **Zusammenfassung**

Die Erfindung betrifft ein Boot mit einem Elektroantrieb, der elektrische Komponenten, insbesondere einen Elektromotor und einen elektrischen Speicher (1), umfasst, wobei die Komponenten (2, 102) über ein elektrisches Leitungsnetz miteinander verbunden sind.
Mindestens eine der Komponenten (2,102) mittels eines ersten Verbindungsmittels (7,107) an das Leitungsnetz angeschlossen ist, wobei das erste Verbindungsmittel (7, 107) Hauptkontakte (3, 4, 5, 6, 103, 104,105,106) zur Verbindung der mindestens einen Komponente (2, 102) mit dem Leitungsnetz aufweist, und wobei ein zweites Verbindungsmittel (10, 11) vorgesehen ist, um den elektrischen Speicher (1) mit dem Leitungsnetz zu verbinden oder von dem Leitungsnetz zu trennen.
Erfindungsgemäß weist das erste Verbindungsmittel (7, 107) mindestens ein Paar von Hilfskontakten (15, 16, 17, 18, 115, 116, 117, 118) zur Verbindung der mindestens einen Komponente (2, 102) mit einer Überwachungsleitung (12) aufweist und die Überwachungsleitung (12) in Wirkverbindung mit dem zweiten Verbindungsmittel (10, 11).

## Beschreibung

Die Erfindung betrifft ein Boot mit einem Elektroantrieb, der elektrische Komponenten, insbesondere einen Elektromotor und einen elektrischen Speicher, umfasst, wobei die Komponenten über ein elektrisches Leitungsnetz miteinander verbunden sind und wobei mindestens eine der Komponenten mittels eines ersten Verbindungsmittels an das Leitungsnetz angeschlossen ist, wobei das erste Verbindungsmittel Hauptkontakte zur Verbindung der mindestens einen Komponente mit dem Leitungsnetz aufweist, und wobei ein zweites Verbindungsmittel vorgesehen ist, um den elektrischen Speicher mit dem Leitungsnetz zu verbinden oder von dem Leitungsnetz zu trennen. Ferner bezieht sich die Erfindung auf Verfahren zum Anschließen bzw. Trennen einer elektrischen Komponente an bzw. von einem zumindest einen elektrischen Speicher umfassenden elektrischen Leitungsnetz auf einem Boot,

In einem elektrischen Stromkreis werden die einzelnen elektrischen Komponenten mit der Spannungsquelle über ein Leitungsnetz miteinander verbunden und zu einem Gesamtsystem zusammengeführt. Die Spannungsfreiheit der Komponenten während des Einbaus ist nicht immer sichergestellt. Ein besonderes Gefahrenpotential geht von Steckern aus. Sind einzelne Bereiche des Stromkreises bereits mit der Spannungsquelle verbunden, dann stellt die offene Verbindungstelle zu einer Komponente, die noch nicht angeschlossen wurde, eine Gefahr dar. Dies gilt insbesondere für Hochvoltanwendungen (HV-Anwendungen), bei denen Spannungen von mehr als 60 V eingesetzt werden.

Bei Booten besteht die Notwendigkeit, einzelne Komponenten regelmäßig vom Leitungsnetz zu trennen oder zusätzliche Komponenten an das Leitungsnetz anzuschließen. Ein typisches Beispiel ist der Außenbordmotor, der zum Saisonwechsel bzw. zu Wartungsarbelten regelmäßig vom Bootsrumpf getrennt werden muss. Personal, welches diese Arbeiten ausführt, bzw. der Bootseigner selbst, haben in der Regel nicht die Ausbildung bzw. die Schulung, um sicher mit HV-Komponenten (Hochvott-Komponenten) umzugehen. Aus diesem Grunde müssen die Schnittstellen und Steckverbindungen, mit denen der Benutzer in Berührung kommt, spannungsfrei ausgeführt werden.

Desweiteren werden identische elektrische Bootsantriebe für unterschiedliche Boote angeboten. Die installierte Energie muss dann der Charakteristik des Bootes und dem Nutzerverhalten angepasst werden können. Das kann dadurch geschehen, dass mehrerer Batteriemodule mit einem Basisenergiegehalt zu einer größeren Batteriebank kombiniert werden. Da diese Anpassung durch den Bootshersteller oder gegebenenfalls auch durch den Bootseigner durchgeführt werden soll, muss eine sichere Steckverbindung verwendet werden, die im Anwendungsfalle an den Kontakten spannungsfrei ist.

In Automobilen wird die installation des elektrischen Antriebssystemes häufig in fester Installation vorgenommen, d.h. Komponenten wie Hochvolt-Batterie (HV-Batterie) und Elektromotor werden unter Verwendung von Schraub- oder bevorzugt Klemmverbindungen zusammengeschaltet.

Teilweise erfolgt die Verbindung der Komponenten auch über Stecker, allerdings ist die Betätigung der Stecker meist nicht für den Fahrteugnutzer, sondern allenfalls für Experten, wie Reparaturbetriebe, vorgesehen. Zum Teil werden auch Stecker verwendet, bei denen die Kontakte berührungssicher ausgeführt sind.

Auf Booten werden die Komponenten dagegen von Laien mit dem Leitungsnetz verbunden oder von diesem getrennt. Außerdem kann die Berührungssicherheit der Kontakte meist auch nur bei trockenen Steckern in trockener Umgebung sichergestellt werden, was auf Booten häufig nicht gegeben ist.

Aufgabe vorliegender Erfindung ist es daher, ein Boot mit einem Elektroantrieb und ein entsprechendes Verfahren vorzuschlagen, wobei elektrische Komponenten sicher in das Leitungsnetz des Bootes geschaltet oder von diesem getrennt werden können.

Diese Aufgabe wird durch ein Boot mit einem Elektroantrieb gelöst, wobei der Elektroantrieb elektrische Komponenten, insbesondere einen Elektromotor und einen elektrischen Speicher, umfasst, wobei die Komponenten über ein elektrisches Leitungsnetz miteinander verbunden sind und wobei mindestens eine der Komponenten mittels eines ersten Verbindungsmittels an das Leitungsnetz angeschlossen ist, wobei das erste Verbindungsmittel Hauptkontakte zur Verbindung der mindestens einen Komponente mit dem Leitungsnetz aufweist, und wobei ein zweites Verbindungsmittel vorgesehen ist, um den elektrischen Speicher mit dem Leitungsnetz zu verbinden oder von dem Leitungsnetz zu trennen, und welches dadurch gekennzeichnet ist, dass das erste Verbindungsmittel mindestens einen Hilfskontakt zur Verbindung der mindestens einen Komponente mit einer Überwachungsleitung aufweist und dass die Überwachungsleitung in Wirkverbindung mit dem zweiten Verbindungsmittel steht.

Das erfindungsgemäße Verfahren zum Anschließen einer elektrischen Komponente an ein zumindest einen elektrischen Speicher umfassendes elektrisches Leitungsnetz auf einem Boot ist dadurch gekennzeichnet, dass der elektrische Speicher von dem Leitungsnetz getrennt wird, anschließend die Komponente mit dem Leitungsnetz verbunden wird und dann die Komponente mit einer Überwachungslekung verbunden wird, und der elektrische Speicher mit dem Leitungsnetz erst dann verbunden wird, wenn die Komponente mit der Überwachungsleitung verbunden ist.

Ferner wird die Aufgabe durch ein Verfahren zum Trennen einer elektrischen Komponente von einem zumindest einen elektrischen Speicher umfassenden elektrischen Leitungsnetz auf einem Boot gelöst, welches dadurch gekennzeichnet ist, dass die Komponente zunächst mit dem Leitungsnetz und mit einer Überwachungsleitung verbunden ist, dann die Komponente von der Überwachungsleitung getrennt wird, woraufhin der elektrische Speicher von dem Leitungsnetz getrennt wird und anschließend die Komponente von dem Leitungsnetz getrennt wird.

Erfindungsgemäß wird mindestens eine Komponente Ober ein erstes Verbindungsmittel mit dem Leitungsnetz des Bootes verbunden. Der Anschluss der Komponente an das Leitungsnetz erfolgt über die Hauptkontakte. Das erste Verbindungsmittel erlaubt ein reversibles Trennen und Verbinden der Komponente mit dem Leitungsnetz, ohne dass das Verbindungsmittel zerstört wird. Über die Hauptkontakte wird die Strom- und Leistungsversorgung der Komponente sichergestellt.

Das erste Verbindungsmittel verfügt außerdem über Hilfskontakte, die erst geschlossen werden, wenn die Verbindung der Komponente über die Hauptkontakte mit dem Leitungsnetz sicher hergestellt wurde. Ober die Überwachungsleitung wird dann ein Signal weitergeleitet, welches auf ein zweites Verbindungsmittel einwirkt. Das zweite Verbindungsmittel kann zum Beispiel ein Relais sein, welches die zum Schalten notwendige Energie aus einer Hilfsspannungsquelle bezieht. Das zweite Verbindungsmittel stellt sicher, dass der elektrische Speicher solange ausgeschaltet bleibt, d.h. vom Leitungsnetz getrennt bleibt, wie über die Hilfskontakte des ersten Verbindungsmittels noch keine Verbindung der Komponente mit der Überwachungsleitung hergestellt ist. Erst nachdem die Verbindung über die Hilfskontakte hergestellt ist und damit auch die Verbindung der Hauptkontakte mit dem Leitungsnetz sicher gestellt ist, wird der elektrische Speicher mit dem Leitungsnetz verbunden. Auf diese Weise wird garantiert, dass die Hauptkontakte beim Anschluss der Komponente spannungsfrei sind.

Das erste Verbindungsmittel ist vorzugsweise als Steckverbindung ausgeführt.

Von Vorteil sind die Hilfskontakte gegenüber den Hauptkontakten nacheilend. Der Begriff "nacheilend" bedeutet, dass beim Anschließen der Komponente an das Leitungsnetz zunächst die Hauptkontakte geschlossen werden, bevor die elektrische Verbindung über die Hilfskontakte hergestellt wird. Analog wird beim Trennen der Komponente von dem Leitungsnetz erst die Verbindung der Komponente mit der Überwachungsteitung über die Hilfskontakte unterbrochen und danach die Verbindung der Komponente mit dem Leitungsnetz über die Hauptkontakte getrennt.

Der elektrische Speicher ist insbesondere eine Batterie oder ein Akkumulator. Besonderen Sicherheitsgewinn bringt die Erfindung bei elektrischen Speichern, insbesondere Batterien oder Akkumulatoren, die eine Spannung von mehr als 60 V, mehr als 100 V oder mehr als 200 V zur Verfügung stellen. So wird die erfindungsgemäße Sicherheitsschaltung beispielsweise mit Vorteil auf Booten eingesetzt, die eine Spannungsversorgung von 300 V oder 400 V aufweisen.

Die Überwachungsleitung zieht sich von Vorteil über mehrere Komponenten und die zugehörigen ersten Verbindungsmittel, mittels derer die Komponenten an das Leitungsnetz angeschlossen werden können. Von Vorteil sind alle ersten Verbindungsmittel über Hilfskontakte an die Überwachungsleitung angeschlossen. Vorzugsweise sind mehrere Komponenten mit der Überwachungsleitung verbunden, wobei die Komponenten bezüglich der Hauptkontakte parallel zueinander geschaltet, bezüglich der Hilfskontakte aber seriell zueinander geschaltet sind.

In diesem Fall kann über die Überwachungsleitung und die angeschlossenen Komponenten nur dann ein Strom fließen, wenn die Hilfskontakte aller angeschlossenen Komponenten ordnungsgemäß gebrückt sind. Ist an einer beliebigen Stelle die Überwachungsleftung unterbrochen, weil die Hilfskontakte einer Komponente nicht ordnungsgemäß mit der Überwachungsleitung verbunden sind, findet in keiner der beteiligten Komponenten ein Stromfluss statt. Alle Komponenten erkennen die vorhandene Unterbrechung und können adäquat reagieren können.

Wenn ein System über eine entsprechende Überwachungsleitung verfügt, kann diese sowohl zur Überwachung der Verbindung der angeschlossenen Komponente an das Leitungsnetz als auch zur Überwachung der Komponente durch andere Komponenten verwendet werden. Sind die Komponenten beispielsweise über Steckverbindungen an das Leitungsnetz angeschlossen, hat die angeschlossene Komponente bei dieser Ausführungsform die Möglichkeit zu erkennen, ob eine der Steckverbindungen der anderen Komponenten oder ob die eigene Steckverbindung fehlerhaft ist.

Von Vorteil wird auch die Komponente selbst und nicht nur ihr Stecker in den Überwachungskreis einbezogen, d.h. an die Überwachungsleitung angeschlossen. In diesem Fall wird beim Auftreten eines Fehlers der angeschlossenen Komponente der Überwachungskreis geöffnet und die Überwachungsleitung unterbrochen, so dass die anderen Komponenten über das Vorliegen eines fehlerhaften Zustandes des Systems informiert werden.

Bei dieser Ausführungsform verfügen demzufolge mehrere Komponenten des Systems über die Eigenschaft, Fehler anderer Komponenten und Fehler in den Verbindungen der anderen Komponenten an das Leitungsnetz zu erkennen und auch eigene Fehler meiden zu können.

Die Überwachungsleitung kann auch von einer Spannungsquelle gespeist werden, wobei die Hilfskontakte mehrerer Komponenten seriell in die Überwachungsleitung geschaltet sind. In diesem Fall detektieren alle Komponenten, die bis zur Unterbrechungsstelle in die Überwachungsleitung eingeschaltet sind, einen geschlossenen und damit fehlerfreien Überwachungskreis. Für bestimmte Anwendungen bzw. bestimmte Komponenten kann diese Ausführung Vorteile bringen.

Bei dieser Art des Überwachungskreises wird durch eine der Komponenten die Spannung des Überwachungskreises an die nächste Komponente weitergeschaltet, bzw. unterbrochen. Erhält die nächste Komponente diese Spannung, hat diese Komponente die Information, dass die sich voran im Überwachungskreis befindenden Komponenten keinen Fehler haben.

Die Hiffskontakte der Komponenten sind in der Überwachungsleitung in Reihe geschaltet Eine Komponente befindet sich hierbei "vor" einer anderen Komponente im Überwachungskreis bzw. in der Überwachungsleitung, wenn sich deren Hilfskontakte näher an dem nicht geerdeten Potential der Spannungsquelle befinden als die Hilfskontakte der anderen Komponente. Die andere Komponente ist der ersten Komponente entsprechend "nachfolgend".

Tritt bei einer Komponente ein Fehler auf, wird sie die Spannung nicht an die nachfolgende Komponente weiterschalten. In diesem Falle ist die nachfolgende Komponente informiert, dass mindestens eine der Komponenten vor ihr fehlerhaft ist. Die in der Überwachungsleitung vor der fehlerhaften Komponente liegenden anderen Komponenten registrieren diesen Fehler jedoch nicht. Diese Ausführungsform der Erfindung ist beispielsweise dann sinnvoll, wenn bei einem Fehler einer einzelnen Komponente nur ausgewählte andere Komponenten, die hinter der fehlerhaften Komponente in die Überwachungsleitung geschaltet sind, abgeschaltet werden sollen.

In einer bevorzugten Variante wird diese Ausführungsform der Erfindung durch die Verwendung einer Kombination von Optokopplern mit Vorwiderständen und Relais umgesetzt, wobei der Optokoppler von der Überwachungsleitung über einen Vorwiderstand gegen Erde bestromt wird. Das Überwachungssignal wird bei Fehlerfreiheit der Komponente und bei fehlerfreiem Anschluss der Hauptkontakte der Komponente über ein Relais realisiert, bei dem der Spannungsabfall vernachlässigbar ist.

Anstatt des Relais können z.B. auch elektronische Schalter, wie z:B. MOSFETs mit sehr niedrigem Innenwiderstand, Verwendung finden.

Eine weitere vorteilhafte Ausführung der Erfindung besteht darin, dass die Komponenten oder deren Komponentensteuerungen ihre Versorgungsspannung aus der Überwachungsleitung beziehen. Damit sind alle Komponenten bzw, Komponentensteuerungen inklusive der fehlerhaften Komponente /Komponentensteuerung mit der Versorgungsspannung verbunden, die nachfolgenden Komponenten jedoch von der Versorgungsspannung getrennt und damit sicher abgeschaltet.

Die Überwachungsleitung kann auch von einer Stromquelle gespeist werden. Ein Strom kann über die Überwachungsleitung und die angeschlossenen Komponenten bzw. deren Hilfskontakte nur dann fließen, wenn die Hilfskontakte aller Komponenten gebrückt, d.h. ordnungsgemäß geschlossen sind. Wird an einer beliebigen Stelle die Leitung unterbrochen, findet in keiner der beteiligten Komponenten ein Stromfluss statt, so dass alle Komponenten die vorhandene Unterbrechung erkennen und adäquat reagieren können.

Umgesetzt kann dieses Prinzip z.B durch die Verwendung von Optokopplern, wobei pro aktiver Komponente ein Sender und ein Empfänger in Reihe geschaltet sind. Wenn der Sender, beispielsweise eine Sendediode, der Bestandteil des Überwachungskreises ist, bestromt wird, hat die Komponente die Information, dass alle anderen überwachten Komponenten und deren Stecker ebenfalls fehlerfrei sind.

Liegt in der Komponente ein Fehler vor, wird die Komponente die auf der Komponentenseite vorhandene Sendediode nicht bestromen, so dass die Überwachungsleitung unterbrochen ist und alle anderen Komponenten über den vorliegenden Fehler informiert sind.

In einer bevorzugten Ausführungsform weist die mindestens eine Komponente, die über das erste Verbindungsmittel an das Leitungsnetz angeschlossen ist oder angeschlossen werden soll, eine Komponentensteuerung. Die Stromversorgung der Komponentensteuerung erfolgt dabei über die Überwachungsleitung. Das hat den Vorteil, dass die Komponente solange komplett spannungsfrei bleibt, bis die Verbindung über die Hauptkontakte und die Verbindung über die Hilfskontakte hergestellt ist.

Die Erfindung sowie weitere vorteilhafte Einzelheiten der Erfindung werden im Folgenden anhand der schematischen Zeichnungen beispielhaft erläutert. Hierbei zeigen
- Figur 1: eine erste Ausführungsform der erfindungsgemäßen Schaltung,
- Figur 2: eine zweite Ausführungsform der erfindungsgemäßen Schaltung,
- Figur 3: eine dritte Ausführungsform der erfindungsgemäßen Schaltung,
- Figur 4: eine vierte Ausführungsform der erfindungsgemäßen Schaltung.

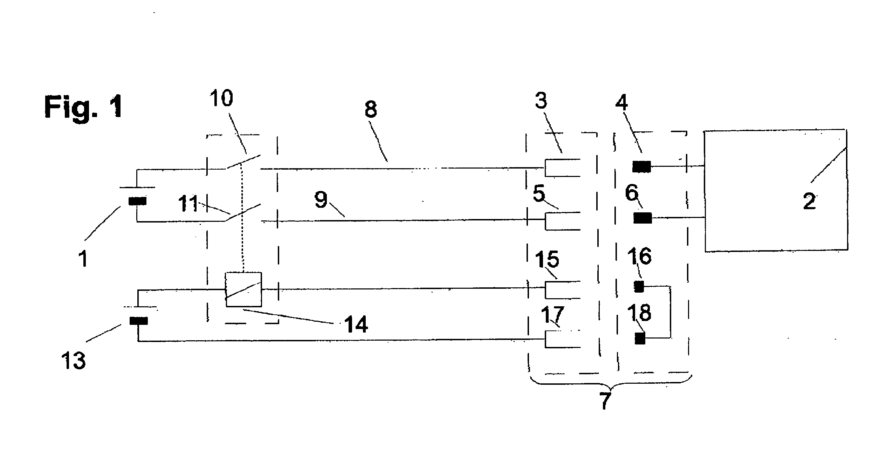

In den Figuren 1 bis 4 sind verschiedene Varianten des Anschlusses ein oder mehrerer elektrischer Komponenten an das elektrische Hochvolt-Netz auf einem Boot dargestellt. Auf einem Boot sind regelmäßig Komponenten dem Hochvolt-Netz zuzuschalten oder von diesem zu trennen. Diese Arbeiten werden häufig von Nicht-Elektrikem durchgeführt. Die Figuren zeigen erfindungsgemäße Schaltungen, die gewährleisten, dass zum Zeitpunkt des Anschlusses oder Trennens einer Komponente von dem Hochvolt-Netz die entsprechenden Hauptkontakte spannungsfrei sind und so keine Gefahren für das Bordpersonal bestehen.

Figur 1 zeigt einen Hochvolt-Speicher 1, insbesondere eine Hochvolt-Batterie, an die eine Komponente 2 angeschlossen werden soll. Der Anschluss der Hochvolt-Komponente 2, beispielsweise eines Elektromotors, erfolgt mittels eines ersten Verbindungsmittels 7, welches Hauptkontakte 3, 4, 5, 6 aufweist. Das erste Verbindungsmittel ist als Steckverbindung ausgeführt mit Buchsen 3, 5, welche Ober Leitungen 8, 9 mit dem Hochvolt-Speicher 1 verbunden sind, und Steckern 4, 6, welche mit der Komponente 2 verbunden sind.

In den Leitungen 8, 9 zwischen dem Hochvolt-Speicher 1 und den Buchsen 3, 5 sind zweite Verbindungsmittel 10, 11 vorgesehen, welche als Schalter ausgeführt sind.

Weiterhin ist ein Überwachungskreis mit einer Überwachungsleitung 12 vorgesehen, an die eine Hilfs-Spannungsquele 13 angeschlossen ist. In die Überwachungsleitung 12 ist ein Relais 14 geschaltet, welches mit den Schaltern 10, 11 gekoppelt ist. Die Schalter 10, 11 sind geschlossen, wenn über die Überwachungsleitung 12 und das Relais 14 ein Strom fließt. Umgekehrt sind die Schalter 10, 11 geöffnet, wenn über die Überwachungsleitung 12 und das Relais 14 kein Strom fließt.

Das erste Verbindungsmittel verfügt außerdem über Hilfskontakte 15, 16, 17, 18, die ebenfalls als Buchsen 15, 17 und Stecker 16, 18 ausgeführt sind. Beim Anschließen des ersten Verbindungsmittels 7, d.h. dem Schließen der Steckverbindung, werden zunächst die Hauptkontakte 3, 4, 5, 6 geschlossen. Die Hilfskontakte 15, 16, 17, 18 sind so in dem ersten Verbindungsmittel 7 angebracht, dass sie immer nach den Hauptkontakten 3, 4, 5, 6 geschlossen werden. Die Hilfskontakte 15, 16, 17, 18 werden erst dann miteinander verbunden, wenn auch die Hauptkontakte 3, 4, 5, 6 ordnungsgemäß verbunden sind.

Wenn die Verbindung der Hilfskontakte 3, 4, 5, 6 sicher hergestellt ist, fließt über die Überwachungsleitung 12 ein Strom, welcher das Relais 14 aktiviert und auf das zweite Verbindungsmittel 10, 11 einwirkt. Das zweite Verbindungsmittel 10, 11 stellt sicher, dass der elektrische Hochvolt-Speicher 1 solange ausgeschaltet bleibt, d.h. vom Leitungsnetz und den Buchsen 3, 5 getrennt bleibt, wie über die Hilfskontakte 15, 16, 17, 18 des ersten Verbindungsmittels 7 noch keine Verbindung der Komponente 2 mit der Überwachungsleitung 12 hergestellt ist. Erst nachdem die Verbindung über die Hilfskontakte 15, 16, 17, 18 hergestellt ist und damit auch die Verbindung der Hauptkontakte 3, 4, 5, 6 sicher gestellt ist, wird der elektrische Hochvolt-Speicher 1 mit dem Leitungsnetz verbunden. Auf diese Welse wird garantiert, dass die Hauptkontakte 3, 4, 5, 6 beim Anschluss der Komponente 2 spannungsfrei sind.

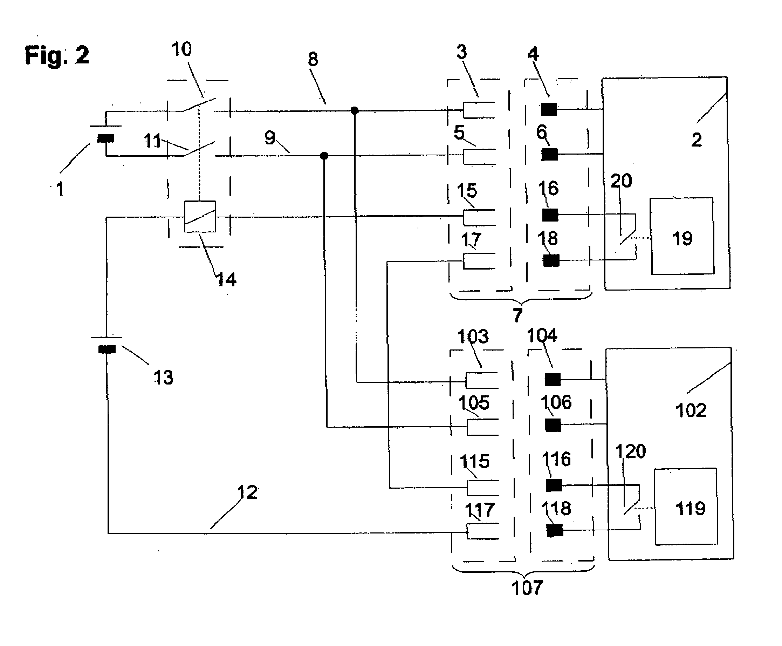

In Figur 2 ist eine Ausführungsform der Erfindung gezeigt, bei der nicht nur das ordnungsgemäße Schließen des ersten Verbindungsmittels mittels der Überwachungsleitung überwacht wird, sondern auch die einzelnen Komponenten selbst auf Fehler überwacht werden.

In allen Figuren 1 bis 4 sind gleiche Bauteile mit den gleichen Bezugsziffern gekennzeichnet.

Figur 2 zeigt eine Variante, bei der neben der Komponente 2 noch eine weitere Komponente 102 an den Hochvolt-Speicher 1 angeschlossen ist bzw. angeschlossen werden soll. Die Komponente 102 wird in analoger Weise über ein erstes Verbindungsmittel 107 mit Hauptkontakten 103, 104, 105, 106 mit dem Hochvolt-Speicher 1 verbunden. Die entsprechende Steckverbindung 107 weist entsprechende Hilfskontakte 115, 116, 117, 118 auf, über die die Komponente 102 an die Überwachungsleitung 12 angeschlossen werden kann.

Im angeschlossenen Zustand sind die Komponenten 2 und 102 bezüglich ihrer Hilfskontakte seriell geschaltet. Die beiden Stecker 16, 18 und die beiden Stecker 116, 118 sind über dazwischengeschaltete Schalter 20, 120 jeweils miteinander verbunden. Sind alle Komponenten 2, 102 ordnungsgemäß über die Hauptkontakte 3, 4, 5, 6 und die Hilfskontakte 15, 16, 17, 18 angeschlossen, so ist der Überwachungskreis von der Hilfs-Spannungsquelle 13, das Relais 14, die Steckverbindung 15, 16, den Schalter 20, die Steckverbindung 17, 18 und die Steckverbindung 115, 116, Schalter 120 und Steckverbindung 117, 118 geschlossen.

Die beiden Komponenten 2, 102 sind jeweils mit einer Fehlererkennungseinrichtung 19, 119 versehen, welche die Komponenten 2, 102 selbst auf Fehler prüfen. Bei Fehlerfreiheit werden die entsprechenden Schalter 20, 120 und damit der Überwachungskreis geschlossen. Dadurch wird das Relais 14 aktiviert, welches die Schalter 10, 11 schließt und den Stromfluss über die Hauptkontakte 3, 4, 5, 6, 103, 104, 105, 106 ermöglicht.

Die in Figur 2 gezeigte Ausführungsform erlaubt die Überwachung der Steckverbindungen 3, 4, 5, 6, 103, 104, 105, 106 der angeschlossenen Komponenten 2,102 als auch zur Überwachung der Komponenten 2, 102. Bei dieser Anwendungsform hat beispielsweise die angeschlossene Komponente 2 die Möglichkeit zu erkennen, ob eine andere Komponente 102 fehlerhaft ist oder ob einer der Stecker 7, 107 fehlerhaft angesteckt ist. Wenn an einer dieser Stellen ein Fehler vorliegt, ist der Überwachungskreis nicht geschlossen und der Hochvoft-Speicher 1 ist vom übrigen Leitungsnetz getrennt.

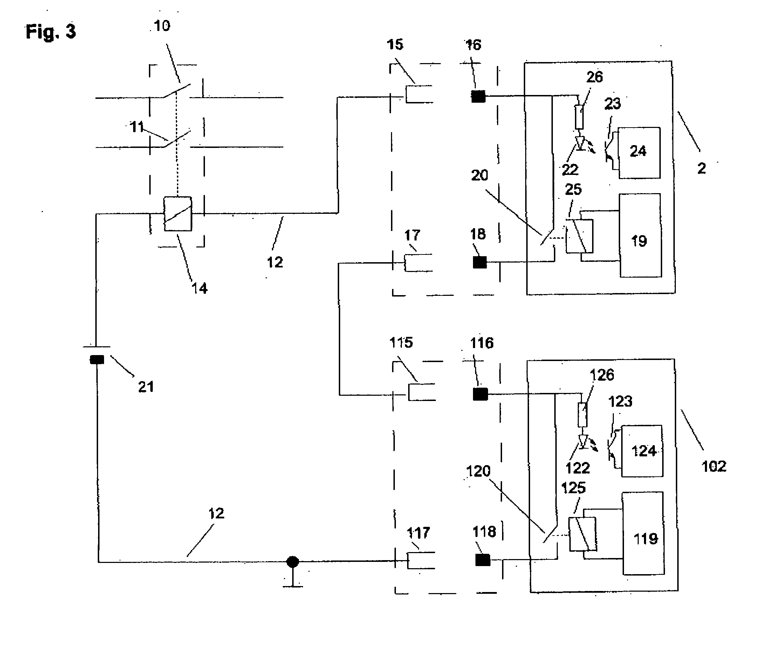

In Figur 3 ist eine Ausführungsform dargestellt, bei der die Hilfsspannung von einer Spannungsquelle 21 zur Verfügung gestellt wird. Der Übersichtlichkeit halber ist in Figur 3 nur der Überwachungskreis ohne das Hochvolt-Leitungsnetz dargestellt.

In dieser Ausführung wird bei einem ordnungsgemäßen Anschluss des ersten Verbindungsmittels 7 der Komponente 2 und einer fehlerfreien Funktion der Komponente 2 die Spannung der Spannungsquelle 21 an den Hilfskontakt 115 des Verbindungsmittels 107 der Komponente 102 weitergeleitet. Die Spannungsquelle 121 liefert an dem Hilfskontakt 15 eine feste Spannung, welche über den Stecker 16 und einen Vorwiderstand 26 an einem Optokoppler 22, 23 angelegt wird. Der Sender 22 des Optokopplers signalisiert dem Empfänger 23 des Optokopplers, dass die Verbindung ordnungsgemäß hergestellt wurde. Eine Auswerteeinrichtung 24 übermittelt dies der Fehlererkennungseinrichtung 19, welche, sofern auch die Komponente 2 selbst fehlerfrei ist, über ein Relais 25 den Schalter 20 schließt. Der Schalter 20 und der Optokoppler 22, 23 sind parallel zueinander geschaltet.

Wenn beim Anschluss der Komponente 2 kein Fehler vorliegt, liegt die Spannung der Spannungsquelle 21 an der Buchse 115 und über Stecker 116 an dem Optokoppler 122, 123 an. Die Fehlerfreiheit der Komponente 102 und deren fehlerfreier Anschluss wird in entsprechender Weise überwacht

Bei dieser Art des Überwachungskreises wird durch die Komponente 2 die Spannung des Überwachungskreises an die nächste Komponenten 102 weitergeschaltet bzw. im Falle eines Fehlers unterbrochen. Erfährt die nächste Komponente 102 diese Spannung, hat die Komponente 102 die Information, dass bei der sich voran im Überwachungskreis befindenden Komponente 2 kein Fehler aufgetreten ist.

Entsprechend erkennt die Komponente 102, dass eine in der Überwachungsleitung 12 zwischen ihr und der Spannungsquelle befindliche andere Komponente einen Fehler hat, wenn an der Buchse 115 nicht mehr die Spannung der Spannungsquelle 21 anliegt. Anstatt des Relais 25, 125 können z.B. auch elektronische Schalter, wie z:B. MOSFETs mit sehr niedrigem Innenwiderstand, Verwendung finden.

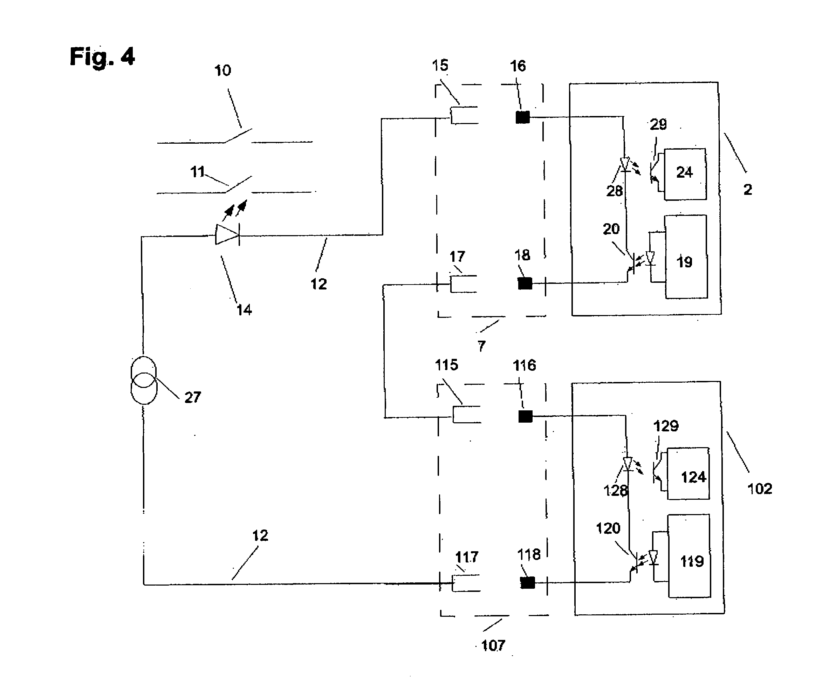

Schließlich ist in Figur 4 eine Ausführungsform mit Stromquelle 27 im Überwachungskreis dargestellt. Der Hochvolt-Lekungskreis ist der Übersichtlichkeit halber wie in Figur 3 nur angedeutet.

Anstelle der Spannungsquelle von Figur 3 ist nunmehr eine Stromquelle 27 vorgesehen. Ein Strom kann über die Überwachungsleitung 12, die ersten Verbindungsmittel 7, 107 und die angeschlossenen Komponenten 2, 102 nur dann fließen, wenn alle Steckverbindungen 15, 16, 17, 18, 115, 116, 117, 118 geschlossen sind und leitende Verbindungen zwischen den Steckern 16 und 18 bzw. den Steckern 116 und 118 bestehen. Wird an einer beliebigen Stelle die Überwachungsleitung 12 unterbrochen, findet in keiner der beteiligten Komponenten 2, 102 ein Stromfluss statt. Das heißt, alle Komponenten 2, 102 erkennen eine Unterbrechung.

In der Schaltung gemäß Figur 4 wird dies dadurch erreicht, dass Optokoppler 28, 29 bzw. 128, 129 in Reihe mit Schaltern 20 bzw. 120 geschaltet sind. Die Schalter 20, 120 sind in dieser Variante als optisch aktivierbare Schaltern ausgeführt. Für die Schalter 20, 120 in den Figuren 2 und 3 sind ebenso optisch aktivierbare Schalter einsetzbar.

Wenn die Sendediode 28, 128 der Optokoppler bestromt ist, das heißt durch die Sendediode 28, 128 ein strom fließt, ist dies ein Zeichen, dass alle Komponenten 2, 102 und deren Steckverbindungen 7, 107 fehlerfrei funktionieren. In diesem fall ist der Überwachungskreis geschlossen und die Schalter 10, 11 des Hochvolt-Kreises werden angesteuert und geschlossen.

## Patentansprüche

1. Boot mit einem Elektroantrieb, der elektrische Komponenten, insbesondere einen Elektromotor und einen elektrischen Speicher (1), umfasst, wobei die Komponenten (2, 102) über ein elektrisches Leitungsnetz miteinander verbunden sind und wobei mindestens eine der Komponenten (2, 102) mittels eines ersten Verbindungsmittels (7,107) an das Leitungsnetz angeschlossen ist, wobei das erste Verbindungsmittel (7, 107) Hauptkontakte (3, 4, 5, 6, 103, 104, 105, 106) zur Verbindung der mindestens einen Komponente (2, 102) mit dem Leitungsnetz aufweist, und wobei ein zweites Verbindungsmittel (10, 11) vorgesehen ist, um den elektrischen Speicher (1) mit dem Leitungsnetz zu verbinden oder von dem Leitungsnetz zu trennen, **dadurch gekennzeichnet, dass** das erste Verbindungsmittel (7, 107) mindestens ein Paar von Hilfskontakten (15, 16, 17, 18, 115, 116, 117, 118) zur Verbindung der mindestens einen Komponente (2, 102) mit einer Überwachungsleitung (12) aufweist und dass die Überwachungsleitung (12) in Wirkverbindung mit dem zweiten Verbindungsmittel (10, 11) steht.

2. Boot nach Anspruch 1, **dadurch gekennzeichnet, dass** das erste Verbindungsmittel (7, 107) als Steckverbindung ausgeführt ist.

3. Boot nach Anspruch 1 oder 2, **dadurch gekennzeichnet, dass** die Hilfskontakte (15, 16, 17, 18, 115, 116, 117, 118) den Hauptkontakten (3, 4, 5, 6, 103, 104, 105, 106) nacheilend sind.

4. Boot nach einem der vorhergehenden Ansprüche, **dadurch gekennzeichnet, dass** der elektrische Speicher (1) als Spannungsquelle, insbesondere als Batterie oder als Akkumulator, ausgeführt ist.

5. Boot nach einem der vorhergehenden Ansprüche, **dadurch gekennzeichnet, dass** der elektrische Speicher (1) als Spannungsquelle mit einer Klemmenspannung von mehr als 60 V ausgeführt ist.

6. Boot nach einem der vorhergehenden Ansprüche, **dadurch gekennzeichnet, dass** mehrere Komponenten (2, 102) mit der Überwachungsleitung (12) verbunden sind, wobei die Hauptkontakte (3, 4, 5, 6, 103, 104, 105, 106) der Komponenten (2, 102) parallel zueinander geschaltet sind.

7. Boot nach einem der vorhergehenden Ansprüche, **dadurch gekennzeichnet, dass** mehrere Komponenten (2, 102) mit der Überwachungsleitung (12) verbunden sind, wobei die Hilfskontakte (15, 16, 17, 18, 115, 116, 117, 118) der Komponenten (2, 102) serieil zueinander geschaltet sind.

8. Boot nach einem der vorhergehenden Ansprüche, **dadurch gekennzeichnet, dass** die mindestens eine Komponente (2, 102) eine Komponentensteuerung aufweist und dass die Stromversorgung der Komponentensteuerung über die Überwachungsleitung (12) erfolgt.

9. Boot nach einem der vorhergehenden Ansprüche, **dadurch gekennzeichnet, dass** eine Spannungsquelle an die Überwachungsteitung angeschlossen ist.

10. Boot nach einem der vorhergehenden Ansprüche, **dadurch gekennzeichnet, dass** eine Stromquelle an die Überwachungsleitung angeschlossen ist.

11. Boot nach einem der vorhergehenden Ansprüche, **dadurch gekennzeichnet, dass** die Überwachungsleitung (12) über ein Relais in Wirkverbindung mit dem zweiten Verbindungsmittel (10, 11) steht.

12. Boot nach einem der vorhergehenden Ansprüche, **dadurch gekennzeichnet, dass** die Komponente eine Fehlererkennungseinrichtung aufweist, welche an die Überwachungsleitung angeschlossen ist.

13. Verfahren zum Anschließen einer elektrischen Komponente (2, 102) an ein zumindest einen elektrischen Speicher (1) umfassendes elektrisches Leitungsnetz auf einem Boot, **dadurch gekennzeichnet, dass** der elektrische Speicher (1) von dem Leitungsnetz getrennt wird, anschließend die Komponente (2, 102) mit dem Leitungsnetz verbunden wird und dann die Komponente (2, 102) mit einer Überwachungsleitung (12) verbunden wird, und der elektrische Speicher (1) mit dem Leitungsnetz erst dann verbunden wird, wenn die Komponente (2, 102) mit der Überwachungsleitung (12) verbunden ist.

14. Verfahren zum Trennen einer elektrischen Komponente (2, 102) von einem zumindest einen elektrischen Speicher (1) umfassenden elektrischen Leitungsnetz auf einem Boot, **dadurch gekennzeichnet, dass** die Komponente (2, 102) zunächst mit dem Leitungsnetz und mit einer Überwachungsleitung (12) verbunden ist, dann die Komponente (2, 102) von der Überwachungsleitung (12) getrennt wird, woraufhin der elektrische Speicher (1) von dem Leitungsnetz getrennt wird und anschließend die Komponente (2, 102) von dem Leitungsnetz getrennt wird.
